(19) Europäisches Patentamt
European Patent Office
Office européen des brevets

(11) **EP 3 115 431 A1**

(12) **EUROPEAN PATENT APPLICATION**
published in accordance with Art. 153(4) EPC

(43) Date of publication:
**11.01.2017 Bulletin 2017/02**

(51) Int Cl.:
***C09K 5/04*** *(2006.01)*     ***F25B 1/00*** *(2006.01)*

(21) Application number: **15758976.3**

(22) Date of filing: **05.03.2015**

(86) International application number:
**PCT/JP2015/056563**

(87) International publication number:
**WO 2015/133587 (11.09.2015 Gazette 2015/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **06.03.2014   JP 2014044171**

(71) Applicant: **Asahi Glass Company, Limited
Tokyo 100-8405 (JP)**

(72) Inventors:
• **FUKUSHIMA, Masato
Tokyo 100-8405 (JP)**
• **TASAKA, Mai
Tokyo 100-8405 (JP)**

(74) Representative: **Müller-Boré & Partner
Patentanwälte PartG mbB
Friedenheimer Brücke 21
80639 München (DE)**

(54) **WORKING MEDIUM FOR HEAT CYCLE, AND HEAT CYCLE SYSTEM**

(57)    To provide a heat cycle system in which the working fluid is incombustible and has less influence over the ozone layer and global warming even if it leaks out, which has excellent cycle performance and which is excellent in the safety.

A heat cycle system which employs a working fluid containing trifluoroethylene and either one or both of 1,1,1,2-tetrafluoroethane and pentafluoroethane, wherein the proportion of trifluoroethylene in a gaseous phase formed in the system is at most 50 mass%. For example, a refrigerating cycle system 10 comprising a compressor 11, a condenser 12, an expansion valve 13 and an evaporator 14, wherein the working fluid is controlled as above.

Fig. 1

**Description**

TECHNICAL FIELD

The present invention relates to a working fluid for heat cycle and a heat cycle system.

BACKGROUND ART

Heretofore, as a heat cycle system to be employed for e.g. a refrigerating apparatus, an air-conditioning apparatus, a power generation system (such as exhaust heat recovery power generation) or a latent heat transport apparatus (such as a heat pipe), one employing as the working fluid a hydrofluorocarbon (hereinafter referred to as HFC) which has less influence over the ozone layer, has been known. However, it is pointed out that HFCs may cause global warming. For example, 1,1,1,2-tetrafluoroethane (HFC-134a) used as a refrigerant for an automobile air-conditioning system has a global warming potential so high as 1,430 (100 years).

As a heat cycle system employing a working fluid which has less influence over the ozone layer and which has less influence over global warming, a heat cycle system employing a hydrofluoroolefin (hereinafter referred to as HFO) has been proposed. A HFO has less influence over the ozone layer and in addition, has less influence over global warming since it has a carbon-carbon double bond which is likely to be decomposed by OH radicals in the air.

Specifically, the following heat cycle systems (1) to (3) may be mentioned.

(1) A heat cycle system which employs a working fluid containing 3,3,3-trifluoropropene (HFO-1243zf), 1,3,3,3-tetrafluoropropene (HFO-1234ze), 2-fluoropropene (HFO-1261yf), 2,3,3,3-tetrafluoropropene (HFO-1234yf), 1,1,2-trifluoropropene (HFO-1243yc) or the like (Patent Document 1).

(2) A heat cycle system which employs a working fluid containing 1,2,3,3,3-pentafluoropropene (HFO-1225ye), trans-1,3,3,3-tetrafluoropropene (HFO-1234ze(E)), cis-1,3,3,3-tetrafluoropropene (HFO-1234ze(Z)), HFO-1234yf or the like (Patent Document 2).

(3) A heat cycle system which employs a working fluid containing trifluoroethylene (HFO-1123) (Patent Document 3).

PRIOR ART DOCUMENTS

PATENT DOCUMENTS

Patent Document 1: JP-A-4-110388
Patent Document 2: JP-A-2006-512426
Patent Document 3: WO2012/157764

DISCLOSURE OF INVENTION

TECHNICAL PROBLEM

However, each of the heat cycle systems (1) and (2) is insufficient in the cycle performance (capacity)

Further, although the heat cycle system (3) is excellent in the cycle performance, HFO-1123 used is combustible. For example, in an automobile air-conditioning system, the working fluid may leak out e.g. from a connection hose or a bearing, and accordingly it is important to employ a working fluid which is less likely to burn even if the working fluid in a gaseous phase formed in the system leaks out and is mixed with the air and is ignited, thereby to secure the safety of the system.

It is an object of the present invention to provide a working fluid for heat cycle which is incombustible, which has less influence over the ozone layer and global warming even if it leaks out, which is excellent in the cycle performance and which is excellent in the safety, and a heat cycle system employing a working fluid which is incombustible and which has less influence over the ozone layer and global warming even when it leaks out, and having excellent cycle performance and being excellent in the safety.

SOLUTION TO PROBLEM

The working fluid for heat cycle of the present invention is a working fluid for heat cycle, which contains trifluoroethylene (hereinafter referred to as HFO-1123) and either one or both of 1,1,1,2-tetrafluoroethane (hereinafter referred to as HFC-134a) and pentafluoroethane (hereinafter referred to as HFC-125), wherein the proportion of HFO-1123 based on the total mass of the working fluid is at most 42 mass%.

The working fluid for heat cycle of the present invention is preferably such that the proportion of the total amount of HFC-134a and HFC-125 based on the total mass of the working fluid for heat cycle is at least 58 mass%.

Further, the working fluid for heat cycle of the present invention is preferably a working fluid for heat cycle, which contains HFO-1123, HFC-134a and HFC-125, and 2,3,3,3-tetrafluorpropene (hereinafter referred to as HFO-1234yf), wherein the proportion of the total amount of HFO-1123, HFC-134a, HFC-125 and HFO-1234yf based on the total mass of the working fluid is higher than 90 mass% and at most 100 mass%, and based on the total amount of HFO-1123, HFC-134a, HFC-125 and HFO-1234yf, the proportion of HFO-1123 is at least 3 mass% and at most 35 mass%, the proportion of HFC-134a is at least 10 mass% and at most 53 mass%, the proportion of HFC-125 is at least 4 mass% and at most 50 mass%, and the proportion of HFO-1234yf is at least 5 mass% and at most 50 mass%.

Further, it is preferred that based on the total amount of HFO-1123, HFC-134a, HFC-125 and HFO-1234yf, the proportion of HFO-1123 is at least 6 mass% and at most 25 mass%, the proportion of HFC-134a is at least 20 mass% and at most 35 mass%, the proportion of HFC-125 is at least 8 mass% and at most 30 mass%, and the proportion of HFO-1234yf is at least 20 mass% and at most 50 mass%.

Further, the working fluid for heat cycle preferably has a global warming potential of at most 2,000.

The heat cycle system of the present invention is a heat cycle system, which employs a working fluid for heat cycle containing HFO-1123 and either one or both of HFC-134a and HFC-125, wherein the proportion of HFO-1123 in a gaseous phase formed in the heat cycle system is at most 50 mass%.

In the heat cycle system of the present invention, the proportion of HFO-1123 based on the total mass of the working fluid in the system is preferably at most 42 mass%.

Further, the proportion of the total amount of HFC-134a and HFC-125 based on the total mass of the working fluid in the system is preferably at least 58 mass%.

Further, the heat cycle system of the present invention is preferably a heat cycle system, wherein the working fluid for heat cycle contains HFO-1123, HFC-134a and HFC-125, and HFO-1234yf, the proportion of the total amount of HFO-1123, HFC-134a, HFC-125 and HFO-1234yf based on the total mass of the working fluid is higher than 90 mass% and at most 100 mass%, and based on the total amount of HFO-1123, HFC-134a, HFC-125 and HFO-1234yf, the proportion of HFO-1123 is at least 3 mass% and at most 35 mass%, the proportion of HFC-134a is at least 10 mass% and at most 53 mass%, the proportion of HFC-125 is at least 4 mass% and at most 50 mass%, and the proportion of HFO-1234yf is at least 5 mass% and at most 50 mass%.

Further, it is preferred that based on the total amount of HFO-1123, HFC-134a, HFC-125 and HFO-1234yf, the proportion of HFO-1123 is at least 6 mass% and at most 25 mass%, the proportion of HFC-134a is at least 20 mass% and at most 35 mass%, the proportion of HFC-125 is at least 8 mass% and at most 30 mass%, and the proportion of HFO-1234yf is at least 20 mass% and at most 50 mass%.

Further, the working fluid for heat cycle preferably has a global warming potential of at most 2,000.

The heat cycle system of the present invention is preferably used for a refrigerating apparatus, an air-conditioning apparatus, a power generation system, a heat transport apparatus or a secondary cooling machine.

The cycle system of the present invention is preferably used for a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, an ice making machine or a vending machine.

ADVANTAGEOUS EFFECTS OF INVENTION

The working fluid for heat cycle of the present invention is incombustible, has less influence over the ozone layer and global warming, is excellent in the cycle performance when used for a heat cycle system, and is excellent in the safety.

The heat cycle system of the present invention employs a working fluid which is incombustible and has less influence over the ozone layer and global warming even if it leaks out, has excellent cycle performance and is excellent in the safety.

BRIEF DESCRIPTION OF DRAWINGS

Fig. 1 is a schematic construction view illustrating a refrigerating cycle system as an example of a heat cycle system of the present invention.

Fig. 2 is a cycle diagram illustrating the state change of a working fluid in a refrigerating cycle system in Fig. 1 on a pressure-enthalpy chart.
Fig. 3 is a diagram illustrating the combustion range of HFO-1123/HFC-134a/air system in Ex. 1.
Fig. 4 is a diagram illustrating the combustion range of HFO-1123/HFC-125/air system in Ex. 2.
Fig. 5 is a diagram illustrating a gas-liquid equilibrium relation of HFO-1123/HFC-134a system in Ex. 16.
Fig. 6 is a diagram illustrating a gas-liquid equilibrium relation of HFO-1123/HFC-125 system in Ex. 17.

DESCRIPTION OF EMBODIMENTS

[Working fluid for heat cycle]

The working fluid for heat cycle of the present invention (hereinafter sometimes referred to simply as a working fluid) is a working fluid containing HFO-1123 and either one or both of HFC-134a and HFC-125. The working fluid of the present invention preferably further contains HFO-1234yf.

The present inventors have found that in a heat cycle system employing the working fluid of the present invention, combustibility of the working fluid in a gaseous phase formed in the system can be suppressed by controlling the proportion of HFO-1123 in the gaseous phase to be within a specific range.

In the present invention, "the gaseous phase formed in the system" means the working fluid present in a gaseous phase in the system. In the system, part of the working fluid may be present as a liquid in some cases, and part of the working fluid may be dissolved in a coexisting liquid such as a lubricating oil in some cases. Accordingly, the working fluid in a gaseous phase formed in the system is a working fluid excluding the liquefied working fluid and the working fluid dissolved in a liquid such as a lubricating oil.

In the heat cycle system of the present invention, the proportion of HFO-1123 in a gaseous phase formed in the system is at most 50 mass%.

"The proportion of HFO-1123 in a gaseous phase formed in the system being at most 50 mass%" means that the proportion of HFO-1123 is always at most 50 mass% in a gaseous phase formed throughout the process in the system. When the proportion of HFO-1123 in the gaseous phase formed in the system is at most 50 mass%, the working fluid is incombustible even when the working fluid in the gaseous phase leaks out of the system and is mixed with the air, and is excellent in the safety.

The proportion of HFO-1123 in the gaseous phase formed in the system is at most 50 mass%, preferably from 5 to 50 mass%, more preferably from 10 to 45 mass%, further preferably from 10 to 40 mass%. When the proportion of HFO-1123 in the gaseous phase is at most the upper limit, the working fluid is incombustible even if it leaks out of the system and is mixed with the air, and is excellent in the safety. When the proportion of HFO-1123 in the gaseous phase is at least the lower limit, excellent cycle performance is likely to be obtained.

In the case of a composition comprising HFO-1123 and HFC-134a, the proportion of HFO-1123 in a gaseous phase formed in the system is, from the same reason, at most 50 mass%, preferably from 5 to 40 mass%, more preferably from 21 to 39 mass%, further preferably from 21 to 30 mass%.

In the case of a composition comprising HFO-1123 and HFC-125, the proportion of HFO-1123 in a gaseous phase formed in the system is, from the same reason, at most 50 mass%, preferably from 5 to 50 mass%, more preferably from 5 to 42 mass%, further preferably from 21 to 39 mass%.

In the case of a composition comprising HFO-1123, HFC-134a and HFC-125, the proportion of HFO-1123 in a gaseous phase formed in the system is, from the same reason, at most 50 mass%, preferably from 5 to 50 mass%, more preferably from 5 to 45 mass%, further preferably from 10 to 35 mass%.

The proportion of HFO-1123 based on the total mass (100 mass%) of the working fluid in the heat cycle system is preferably at most 42 mass%, more preferably from 5 to 42 mass%, further preferably from 10 to 35 mass%, particularly preferably from 10 to 30 mass%. When the proportion of HFO-1123 is at least the lower limit, excellent cycle performance is likely to be obtained. When the proportion of HFO-1123 is at most the upper limit, combustibility of the working fluid in a gaseous phase formed in the system is suppressed, and accordingly the working fluid is less likely to burn even if it leaks out of the system, is mixed with the air and is ignited, and is excellent in the safety.

Here, "the total mass of the working fluid in the system" means the total amount of the working fluid present in a gaseous phase in the system, the working fluid present as a liquid and the working fluid dissolved in a liquid such as a lubricating oil, that is, the entire amount of the working fluid present in the system. Accordingly, the proportion of each working fluid component (for example, HFO-1123) based on the total mass of the working fluid in the system is equal to the proportion of each working fluid component in the working fluid.

The proportion of the total amount of HFC-134a and HFC-125 base on the total mass of the working fluid in the system is preferably at least 58 mass%, more preferably from 58 to 95 mass%, further preferably from 65 to 90 mass%, most preferably from 70 to 90 mass%. When the proportion of the total mass is at least the lower limit, combustibility of the working fluid in the gaseous phase formed in the system tends to be suppressed. When the proportion of the total mass is at most the upper limit, the content of HFO-1123 can be relatively increased, and accordingly excellent cycle performance is likely to be obtained.

The working fluid of the present invention is preferably a working fluid containing HFO-1123, HFC-134a and HFC-125, and HFO-1234yf, wherein the proportion of the total amount of HFO-1123, HFC-134a, HFC-125 and HFO-1234yf based on the entire amount of the working fluid is higher than 90 mass% and at most 100 mass%, and based on the total amount of HFO-1123, HFC-134a, HFC-125 and HFO-1234yf, the proportion of HFO-1123 is at least 3 mass% and at most 35 mass%, the proportion of HFC-134a is at least 10 mass% and at most 53 mass%, the proportion of HFC-125 is at least 4 mass% and at most 50 mass%, and the proportion of HFO-1234yf is at least 5 mass% and at most 50 mass%. Such a working fluid is incombustible, is excellent in the safety, has less influence over the ozone layer and global warming, and is more excellent in the cycle performance when employed for a heat cycle system.

Further, the working fluid of the present invention is more preferably a working fluid containing HFO-1123, HFC-134a and HFC-125, and HFO-1234yf, wherein the proportion of the total amount of HFO-1123, HFC-134a, HFC-125 and HFO-1234yf based on the entire amount of the working fluid is higher than 90 mass% and at most 100 mass%, and based on the total amount of HFO-1123, HFC-134a, HFC-125 and HFO-1234yf, the proportion of HFO-1123 is at least 6 mass% and at most 25 mass%, the proportion of HFC-134a is at least 20 mass% and at most 35 mass%, the proportion of HFC-125 is at least 8 mass% and at most 30 mass%, and the proportion of HFO-1234yf is at least 20 mass% and at most 50 mass%. Such a working fluid is incombustible, is more excellent in the safety, has little influence over the ozone layer and global warming, and is more excellent in the cycle performance when employed for a heat cycle system.

The working fluid may contain, within a range not to impair the effects of the present invention, as the case requires, a HFO other than HFO-1123 and HFO-1234yf, a HFC other than HFC-134a and HFC-125, a hydrocarbon, a HCFO, a CFO or another compound.

(HFO other than HFO-1123 and HFO-1234yf)

The HFO other than HFO-1123 and HFO-1234yf may, for example, be 1,2-difluoroethylene (HFO-1132), 2-fluoropropene (HFO-1261yf), 1,1,2-trifluoropropene (HFO-1243yc), trans-1,3,3,3-tetrafluoropropene (HFO-1234ze(E)), cis-1,3,3,3-tetrafluoropropene (HFO-1234ze(Z)), 3,3,3-trifluoropropene (HFO-1243zf), trans-1,2,3,3,3-pentafluoropropene (HFO-1225ye(E)) or cis-1,2,3,3,3-pentafluoropropene (HFO-1225ye(Z)).

The HFO other than HFO-1123 and HFO-1234yf may be used alone or in combination of two or more.

In a case where the working fluid contains the HFO other than HFO-1123 and HFO-1234yf, the proportion of the total mass of the HFO based on the total mass (100 mass%) of the working fluid in the system is preferably from 1 to 30 mass%, more preferably from 2 to 10 mass%.

(HFC other than HFC-134a and HFC-125)

The HFC other than HFC-134a and HFC-125 is a component which improves the cycle performance (capacity) of the heat cycle system. The HFC other than HFC-134a and HFC-125 is preferably a HFC which has less influence over the ozone layer and which has less influence over global warming.

The HFC other than HFC-134a and HFC-125 may, for example, be difluoromethane, difluoroethane, trifluoroethane, pentafluoropropane, hexafluoropropane, heptafluoropropane, pentafluorobutane or heptafluorocyclopentane. Among them, particularly preferred is difluoromethane (HFC-32) or 1,1-difluoroethane (HFC-152a) in view of less influence over the ozone layer and less influence over global warming.

The HFC other than HFC-134a and HFC-125 may be used alone or in combination of two or more.

The content of the HFC other than HFC-134a and HFC-125 may be controlled depending upon the required properties of the working fluid.

In a case where the working fluid contains the HFC other than HFC-134a and HFC-125, the proportion of the total mass of the HFC based on the total mass (100 mass%) of the working fluid in the system is preferably from 1 to 40 mass%, more preferably from 2 to 10 mass%.

(Hydrocarbon)

The hydrocarbon is a component which improves the solubility of the after-described mineral oil in the working fluid.

The hydrocarbon may, for example, be propane, propylene, cyclopropane, butane, isobutane, pentane or isopentane.

The hydrocarbon may be used alone or in combination of two or more.

In a case where the working fluid contains the hydrocarbon, the proportion of the total mass of the hydrocarbon based on the total mass (100 mass%) of the working fluid in the system is preferably from 1 to 10 mass%, more preferably from 2 to 5 mass%. When the proportion of the total mass of the hydrocarbon is at least the lower limit, solubility of a lubricating oil in the working fluid tends to be favorable. When the proportion of the total mass of the hydrocarbon is at most the upper limit, combustibility of the working fluid tends to be suppressed.

(HCFO, CFO)

The HCFO and the CFO are components which suppress combustibility of the working fluid and improve the solubility of a lubricating oil in the working fluid. As the HCFO and the CFO, preferred is a HCFO or a CFO which has less influence over the ozone layer and which has less influence over global warming.

The HCFO may, for example, be a hydrochlorofluoropropene or a hydrochlorofluoroethylene. Among them, preferred is 1-chloro-2,3,3,3-tetrafluoropropene (HCFO-1224yd) or 1-chloro-1,2-difluoroethylene (HCFO-1122), with a view to sufficiently suppressing combustibility of the working fluid without remarkably lowering the cycle performance (capacity) of the heat cycle system.

The HCFO may be used alone or in combination of two or more.

The CFO may, for example, be a chlorofluoropropene or a chlorofluoroethylene. Among them, preferred is 1,1-dichloro-2,3,3,3-tetrafluoropropene (CFO-1214ya) or 1,2-dichloro-1,2-difluoroethylene (CFO-1112) with a view to sufficiently suppressing combustibility of the working fluid without remarkably lowering the cycle performance (capacity) of the heat cycle system.

In a case where the working fluid contains either one or both of the HCFO and the CFO, the proportion of the sum of the mass of the HCFO and the mass of the CFO based on the total mass (100 mass%) of the working fluid in the system is preferably from 1 to 20 mass%, more preferably from 1 to 10 mass%. Chlorine atoms have an effect to suppress combustibility, and by addition of the HCFO and the CFO, combustibility of the working fluid can be sufficiently suppressed without remarkably lowering the cycle performance (capacity) of the heat cycle system.

(Other compound)

Other compound may, for example, be a $C_{1-4}$ alcohol or a compound used as a conventional working fluid, refrigerant or heat transfer fluid. Further, a fluorinated ether such as perfluoropropyl methyl ether ($C_3F_7OCH_3$), perfluorobutyl methyl ether ($C_4F_9OCH_3$), perfluorobutyl ethyl ether ($C_4F_9OC_2H_5$) or 1,1,2,2-tetrafluoroethyl-2,2,2-trifluoroethyl ether ($CF_2HCF_2OCH_2CF_3$, manufactured by Asahi Glass Company, Limited, AE-3000) may be used.

The proportion of the total mass of such other compound based on the total mass (100 mass%) of the working fluid in the system is within a range not to remarkably decrease the effects of the present invention, and is preferably at most 30 mass%, more preferably at most 20 mass%, further preferably at most 15 mass%.

[Application to heat cycle system]

<Composition for heat cycle system>

The working fluid of the present invention may be used usually as a composition for a heat cycle system as mixed with a lubricating oil in application to a heat cycle system. The composition for a heat cycle system comprising the working fluid of the present invention and a lubricating oil may further contain a known additive such as a stabilizer or a leak detecting substance.

[Lubricating oil]

In the heat cycle system of the present invention, the working fluid may be used as mixed with a lubricating oil. As a lubricating oil, a known lubricating oil used for the heat cycle system may be used.

The lubricating oil may, for example, be an oxygen-containing synthetic oil (such as an ester lubricating oil or an ether lubricating oil), a fluorinated lubricating oil, a mineral oil or a hydrocarbon synthetic oil.

The ester lubricating oil may, for example, be a dibasic acid ester oil, a polyol ester oil, a complex ester oil or a polyol carbonate oil.

The dibasic acid ester oil is preferably an ester of a $C_{5-10}$ dibasic acid (such as glutaric acid, adipic acid, pimelic acid, suberic acid, azelaic acid or sebacic acid) with a $C_{1-15}$ monohydric alcohol which is linear or has a branched alkyl group (such as methanol, ethanol, propanol, butanol, pentanol, hexanol, heptanol, octanol, nonanol, decanol, undecanol, dodecanol, tridecanol, tetradecanol or pentadecanol). Specifically, ditridecyl glutarate, di(2-ethylhexyl) adipate, diisodecyl adipate, ditridecyl adipate or di(3-ethylhexyl) sebacate may, for example, be mentioned.

The polyol ester oil is preferably an ester of a diol (such as ethylene glycol, 1,3-propanediol, propylene glycol, 1,4-butanediol, 1,2-butandiol, 1,5-pentadiol, neopentyl glycol, 1,7-heptanediol or 1,12-dodecanediol) or a polyol having from 3 to 20 hydroxy groups (such as trimethylolethane, trimethylolpropane, trimethylolbutane, pentaerythritol, glycerol, sorbitol, sorbitan or sorbitol/glycerin condensate) with a $C_{6-20}$ fatty acid (such as a linear or branched fatty acid such as hexanoic acid, heptanoic acid, octanoic acid, nonanoic acid, decanoic acid, undecanoic acid, dodecanoic acid, eicosanoic acid or oleic acid, or a so-called neo acid having a quaternary $\alpha$ carbon atom).

The polyol ester oil may have a free hydroxy group.

The polyol ester oil is preferably an ester (such as trimethylolpropane tripelargonate, pentaerythritol 2-ethylhexanoate or pentaerythritol tetrapelargonate) of a hindered alcohol (such as neopentyl glycol, trimethylolethane, trimethylolpropane, trimethylolbutane or pentaerythritol).

The complex ester oil is an ester of a fatty acid and a dibasic acid, with a monohydric alcohol and a polyol. The fatty acid, the dibasic acid, the monohydric alcohol and the polyol may, for example, be those as described for the dibasic acid ester oil and the polyol ester oil.

The polyol carbonate oil is an ester of carbonic acid with a polyol.

The polyol may, for example, be a diol or polyol (one as described for the polyol ester oil). Further, the polyol carbonate oil may be a ring-opening polymer of a cyclic alkylene carbonate.

The ether lubricating oil may, for example, be a polyoxyalkylene compound or a polyvinyl ether.

The polyoxyalkylene compound may be a polyoxyalkylene monool or polyoxyalkylene polyol obtained by e.g. a method of polymerizing a $C_{2-4}$ alkylene oxide (such as ethylene oxide or propylene oxide) using as an initiator e.g. water, an alkane monool, the above diol or the above polyol. The polyoxyalkylene compound may be one having one or more of hydroxy groups of a polyoxyalkylene monool or a polyoxyalkylene polyol alkyl-etherified.

One molecule of the polyoxyalkylene compound may contain single oxyalkylene units or two or more types of oxyalkylene units. It is preferred that at least oxypropylene units are contained in one molecule.

The polyalkylene glycol oil is one type of the above polyoxyalkylene compound, and may, for example, be the above polyoxyalkylene monool, polyoxyalkylene diol or alkyl ether thereof. Specifically, it may, for example, be a polyoxyalkylene compound obtained by adding a $C_{2-4}$ alkylene oxide to a monohydric or dihydric alcohol (such as methanol, ethanol, butanol, ethylene glycol, propylene glycol or 1,4-butanediol), or a compound having one or more of hydroxy groups of the obtained polyoxyalkylene compound alkyl-etherified.

The polyalkylene glycol oil is preferably a dialkyl ether of a polyoxypropylene diol.

The polyvinyl ether may be a polymer of a vinyl ether monomer, a copolymer of a vinyl ether monomer and a hydrocarbon monomer having an olefinic double bond, or a copolymer of a vinyl ether monomer and a vinyl ether type monomer having a polyoxyalkylene chain.

The vinyl ether monomer is preferably an alkyl vinyl ether, and its alkyl group is preferably an alkyl group having at most 6 carbon atoms. The vinyl ether monomer may be used alone or in combination of two or more.

The hydrocarbon monomer having an olefinic double bond may, for example, be ethylene, propylene, various forms of butene, various forms of pentene, various forms of hexene, various forms of heptene, various forms of octene, diisobutylene, triisobutylene, styrene, $\alpha$-methylstyrene or alkyl-substituted styrene. The hydrocarbon monomer having an olefinic double bond may be used alone or in combination of two or more.

The polyvinyl ether copolymer may be either of a block copolymer and a random copolymer.

The fluorinated lubricating oil may, for example, be a compound having hydrogen atoms of a synthetic oil (such as the after-mentioned mineral oil, poly-$\alpha$-olefin, alkylbenzene or alkylnaphthalene) substituted by fluorine atoms, a perfluoropolyether oil or a fluorinated silicone oil.

The mineral oil may, for example, be a naphthene mineral oil or a paraffin mineral oil obtained by purifying a lubricating oil fraction obtained by atmospheric distillation or vacuum distillation of crude oil by a purification treatment (such as solvent deasphalting, solvent extraction, hydrocracking, solvent dewaxing, catalytic dewaxing, hydrotreating or clay treatment) optionally in combination.

The hydrocarbon synthetic oil may, for example, be a poly-$\alpha$-olefin, an alkylbenzene or an alkylnaphthalene.

The lubricating oil may be used alone or in combination of two or more.

The lubricating oil is preferably either one or both of a polyol ester oil and a polyalkylene glycol oil in view of the compatibility with the working fluid, particularly preferably a polyalkylene glycol oil with a view to obtaining a remarkable antioxidant effect by a stabilizer.

In a case where the working fluid is used as mixed with the lubricating oil, the amount of the lubricating oil is within a range not to remarkably decrease the effects of the present invention, and is properly determined depending upon e.g. the application and the form of a compressor. The proportion of the total mass of the lubricating oil in the system is preferably from 10 to 100 parts by mass, more preferably from 20 to 50 parts by mass per 100 parts by mass of the total mass of the working fluid.

[Stabilizer]

The stabilizer is a component which improves the stability of the working fluid against heat and oxidation. The stabilizer may, for example, be an oxidation resistance-improving agent, a heat resistance-improving agent or a metal deactivator.

The oxidation resistance-improving agent and the heat resistance-improving agent may, for example, be N,N'-diphenylphenylenediamine, p-octyldiphenylamine, p,p'-dioctyldiphenylamine, N-phenyl-1-naphthyamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol or 4,4'-methylenebis(2,6-di-t-butylphenol). The oxidation resistance-improving agent and the heat resistance-improving agent may be used alone or in combination of two or more.

The metal deactivator may, for example, be imidazole, benzimidazole, 2-mercaptobenzothiazole, 2,5-dimercaptothiadiazole, salicylidene-propylenediamine, pyrazole, benzotriazole, tritriazole, 2-methylbenzimidazole, 3,5-dimethylpyrazole, methylenebis-benzotriazole, an organic acid or an ester thereof, a primary, secondary or tertiary aliphatic amine, an amine salt of an organic acid or inorganic acid, a heterocyclic nitrogen-containing compound, an amine salt of an alkyl phosphate, or a derivative thereof.

The proportion of the total mass of the stabilizer based on the total mass (100 mass%) of the working fluid in the system is not limited within a range not to remarkably decrease the effects of the present invention, and is preferably at most 5 mass%, more preferably at most 1 mass%.

[Leak detecting substance]

The leak detecting substance may, for example, be an ultraviolet fluorescent dye, an odor gas or an odor masking agent.

The ultraviolet fluorescent dye may be known ultraviolet fluorescent dyes as disclosed in e.g. US Patent No. 4,249,412, JP-A-10-502737, JP-A-2007-511645, JP-A-2008-500437 and JP-A-2008-531836.

The odor masking agent may be known perfumes as disclosed in e.g. JP-A-2008-500437 and JP-A-2008-531836.

In a case where the leak detecting substance is used, a solubilizing agent which improves the solubility of the leak detecting substance in the working fluid may be used.

The solubilizing agent may be ones as disclosed in e.g. JP-A-2007-511645, JP-A-2008-500437 and JP-A-2008-531836.

The proportion of the total mass of the leak detecting substance based on the total mass (100 mass%) of the working fluid in the system is not particularly limited within a range not to remarkably decrease the effects of the present invention, and is preferably at most 2 mass%, more preferably at most 0.5 mass%.

(Moisture concentration)

For example, in an automobile air-conditioning system, moisture tends to be included from a refrigerant hose or a bearing of a compressor used for the purpose of absorbing vibration.

If moisture is included in the heat cycle system, problems such as freezing in a capillary tube, hydrolysis of the working fluid or the lubricating oil, deterioration of materials by an acid component formed in the system, formation of contaminants, etc. may arise. Particularly, the polyalkylene glycol oil, the polyol ester oil or the like has extremely high moisture absorbing properties and is likely to undergo hydrolysis to deteriorate properties as the lubricating oil, and thus inclusion of moisture may be a great cause to impair the long term reliability of a compressor. Accordingly, in order to suppress hydrolysis of the lubricating oil, it is necessary to suppress the moisture concentration in the heat cycle system.

As a method of suppressing the moisture concentration in the heat cycle system, a method of using a desiccating agent (such as silica gel, activated alumina or zeolite) may be mentioned. The desiccating agent is preferably a zeolite desiccating agent in view of chemical reactivity of the desiccating agent and the working fluid, and the moisture absorption capacity of the desiccating agent.

The zeolite desiccating agent is, in a case where a lubricating oil having a large moisture absorption as compared with a conventional mineral oil is used, preferably a zeolite desiccating agent containing a compound represented by the following formula (1) as the main component in view of excellent moisture absorption capacity.

$$M_{2/n}O \cdot Al_2O_3 \cdot xSiO_2 \cdot yH_2O \qquad (1)$$

wherein M is a group 1 element such as Na or K or a group 2 element such as Ca, n is the valence of M, and x and y are values determined by the crystal structure. The pore size can be adjusted by changing M.

To select the desiccating agent, the pore size and the fracture strength are particularly important.

In a case where a desiccating agent having a pore size larger than the molecular size of the working fluid is used, the working fluid is adsorbed in the desiccating agent and as a result, chemical reaction between the working fluid and the desiccating agent will occur, thus leading to undesired phenomena such as formation of non-condensing gas, a decrease in the strength of the desiccating agent, and a decrease in the adsorption capacity.

Accordingly, it is preferred to use as the desiccating agent a zeolite desiccating agent having a small pore size. Particularly preferred is sodium/potassium type A synthetic zeolite having a pore size of at most 3.5 Å. By using a sodium/potassium type A synthetic zeolite having a pore size smaller than the molecular size of the working fluid, it is possible to selectively adsorb and remove only moisture in the heat cycle system without adsorbing the working fluid. The working fluid is less likely to be adsorbed in the desiccating agent, whereby heat decomposition of the working fluid is less likely to occur and as a result, deterioration of materials constituting the heat cycle system and formation of contaminants can be suppressed.

The size of the zeolite desiccating agent is preferably from about 0.5 to about 5 mm, since if it is too small, an expansion valve or a thin portion in pipelines may be clogged, and if it is too large, the drying capacity will be decreased. The shape of the zeolite desiccating agent is preferably granular or cylindrical.

The zeolite desiccating agent may be formed into an optional shape by solidifying powdery zeolite by a binding agent (such as bentonite). So long as the desiccating agent is composed mainly of the zeolite desiccating agent, other desiccating agent (such as silica gel or activated alumina) may be used in combination.

The proportion of the zeolite desiccating agent based on the working fluid is not particularly limited.

[Chlorine concentration]

If chlorine is present in the heat cycle system, it has adverse effects such as formation of a deposit by reaction with a metal, abrasion of the bearing, and decomposition of the working fluid or the lubricating oil.

The chlorine concentration in the heat cycle system is preferably at most 100 ppm, particularly preferably at most 50 ppm by the mass ratio based on the working fluid.

[Non-condensing gas concentration]

If non-condensing gas is included in the heat cycle system, it has adverse effects such as heat transfer failure in the condenser or the evaporator and an increase in the working pressure, and it is necessary to suppress inclusion of non-condensing gas as far as possible. Particularly, oxygen which is one of non-condensing gases reacts with the working fluid or the lubricating oil and promotes their decomposition. The non-condensing gas may, for example, be nitrogen, oxygen or the air.

The concentration of the non-condensing gas in the heat cycle system is preferably at most 1.5 vol%, particularly preferably at most 0.5 vol% by the volume ratio based on the working fluid, in a gaseous phase in the system.

The heat cycle system of the present invention may, for example, be a refrigerating cycle system, a Rankine cycle system, a heat pump cycle system or a heat transport system.

[Refrigerating cycle system]

The refrigerating cycle system is a system wherein in an evaporator, a working fluid removes heat energy from a load fluid to cool the load fluid thereby to accomplish cooling to a lower temperature.

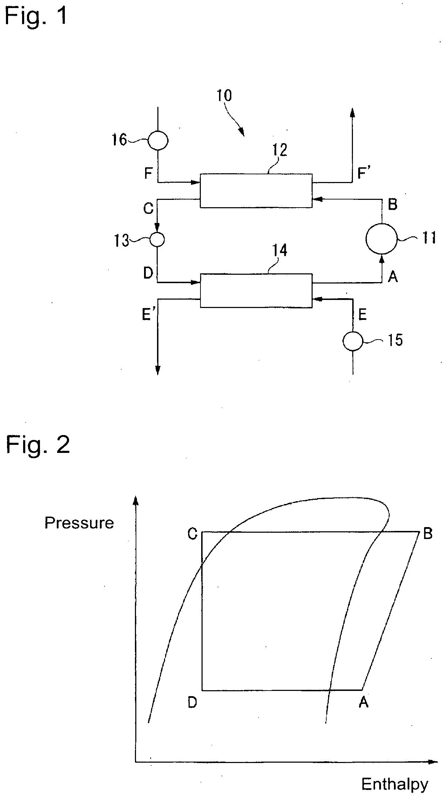

Now, a specific example of a refrigerating cycle system will be described with reference to Fig. 1.

A refrigerating cycle system 10 is a system generally comprising a compressor 11 to compress a working fluid vapor A to form a high temperature/high pressure working fluid vapor B, a condenser 12 to cool and liquefy the working fluid vapor B discharged from the compressor 11 to form a low temperature/high pressure working fluid C, an expansion valve 13 to let the working fluid C discharged from the condenser 12 expand to form a low temperature/low pressure working fluid D, an evaporator 14 to heat the working fluid D discharged from the expansion valve 13 to form a high temperature/low pressure working fluid vapor A, a pump 15 to supply a load fluid E to the evaporator 14, and a pump 16 to supply a fluid F to the condenser 12.

In the refrigerating cyclic system 10, the following cycle is repeated.

(i) A working fluid vapor A discharged from an evaporator 14 is compressed by a compressor 11 to form a high temperature/high pressure working fluid vapor B.

(ii) The working fluid vapor B discharged from the compressor 11 is cooled and liquefied by a fluid F in a condenser 12 to form a low temperature/high pressure working fluid C. At that time, the fluid F is heated to form a fluid F', which is discharged from the condenser 12.

(iii) The working fluid C discharged from the condenser 12 is expanded in an expansion valve 13 to form a low temperature/low pressure working fluid D.

(iv) The working fluid D discharged from the expansion valve 13 is heated by a load fluid E in the evaporator 14 to form a high temperature/low pressure working fluid vapor A. At that time, the load fluid E is cooled and becomes a load fluid E', which is discharged from the evaporator 14.

The refrigerating cycle system 10 is a cycle comprising an adiabatic isentropic change, an isenthalpic change and an isobaric change, and the state change of the working fluid may be shown as in Fig. 2, when it is represented on a pressure-enthalpy chart.

In Fig. 2, the AB process is a process wherein adiabatic compression is carried out by the compressor 11 to change the high temperature/low pressure working fluid vapor A to a high temperature/high pressure working fluid vapor B. The BC process is a process wherein isobaric cooling is carried out in the condenser 12 to change the high temperature/high pressure working fluid vapor B to a low temperature/high pressure working fluid C. The CD process is a process wherein isenthalpic expansion is carried out by the expansion valve 13 to change the low temperature/high pressure working fluid C to a low temperature/low pressure working fluid D. The DA process is a process wherein isobaric heating is carried out in the evaporator 14 to have the low temperature/low pressure working fluid D returned to a high temperature/low pressure working fluid vapor A.

[Rankine cycle system]

The Rankine cycle system is a system wherein in an evaporator, a working fluid is heated by e.g. geothermal energy, solar heat or waste heat in a medium-to-high temperature range at a level of from 50 to 200°C, and the vaporized working fluid in a high temperature and high pressure state is adiabatically expanded by an expansion device, so that a power generator is driven by the work generated by the adiabatic expansion to carry out power generation.

As a specific example of the Rankine cycle system, for example, the following system may be mentioned.

A system generally comprising an expansion device to let a high temperature/high pressure working fluid vapor expand to form a low temperature/low pressure working fluid vapor, a power generator driven by the work generated by the adiabatic expansion of the working fluid vapor in the expansion device, a condenser to cool and liquefy the working fluid vapor discharged from the expansion device to form a working fluid, a pump to pressurize the working fluid discharged from the condenser to form a high pressure working fluid, an evaporator to heat the working fluid discharged from the pump to form a high temperature/high pressure working fluid vapor, a pump to supply a fluid to the condenser, and a pump to supply a fluid to the evaporator.

In the Rankine cycle system, the following cycle is repeated.

(i) A high temperature/high pressure working fluid vapor discharged from an evaporator is expanded in an expansion device to form a low temperature/low pressure working fluid vapor. At that time, a power generator is driven by the work generated by the adiabatic expansion of the working fluid vapor in the expansion device to carry out power generation.

(ii) The working fluid vapor discharged from the expansion device is cooled and liquefied by a fluid in a condenser to form a working fluid. At that time, the fluid supplied to the evaporator is heated and discharged from the condenser.

(iii) The working fluid discharged from the condenser is pressurized by a pump to form a high pressure working fluid.

(iv) The working fluid discharged from the pump is heated by a fluid in the evaporator to form a high temperature/high pressure working fluid vapor. At that time, the fluid supplied to the evaporator is cooled and discharged from the evaporator.

[Heat pump cycle system]

The heat pump cycle system is a system wherein in a condenser, heat energy of a working fluid is imparted to a load fluid to heat the load fluid thereby to accomplish heating to a higher temperature.

As a specific example of the heat pump cycle system, the following may be mentioned.

A system generally comprising a compressor to compress a working fluid vapor to form a high temperature/high pressure working fluid vapor, a condenser to cool and liquefy the working fluid vapor discharged from the compressor to form a low temperature/high pressure working fluid, an expansion valve to let the working fluid discharged from the condenser expand to form a low temperature/low pressure working fluid, an evaporator to heat the working fluid discharged from the expansion valve to form a high temperature/low pressure working fluid vapor, a pump to supply a heat source fluid to the evaporator, and a pump to supply a load fluid to the condenser.

In the heat pump cycle system, the following cycle is repeated.

(i) A working fluid vapor discharged from an evaporator is compressed by a compressor to form a high temperature/high pressure working fluid vapor.

(ii) The working fluid vapor discharged from the compressor is cooled and liquefied by a load fluid in a condenser to form a low temperature/high pressure working fluid. At that time, the load fluid is heated and discharged from the condenser.

(iii) The working fluid discharged from the condenser is expanded by an expansion valve to form a low temperature/low pressure working fluid.

(iv) The working fluid discharged from the expansion valve is heated by a heat source fluid in an evaporator to form a high temperature/low pressure working fluid vapor. At that time, the heat source fluid is cooled and discharged from the evaporator.

[Heat transport system]

The heat transport system is a system wherein a working fluid is evaporator by a heat source to let the working fluid absorb the heat energy, the vaporized working fluid is transported to where it is condensed to let the working fluid discharge the heat energy, whereby the heat energy is transported.

As a specific example of the heat transport system, for example, the following system may be mentioned.

A system generally comprising a pipe arranged from a heat source to a site where the heat is to be transported, filled with a working fluid, a wick (mesh screen) disposed on the inner surface of the pipe, and a radiating portion provided on the edge opposite from the heat source in the pipe.

In the heat transport system, the following cycle is repeated.

(i) In a pipe on the heat source side, a working fluid is evaporated by heat energy by a heat source to form a working fluid vapor.

(ii) The working fluid vapor is transported from the heat source side to a radiating portion, and is condensed and liquefied at the radiating portion.

(iii) The liquefied working fluid is transported to the heat source side and circulated by a wick employing capillarity.

[Application]

The application of the heat cycle system may, for example, be a refrigerating apparatus, an air-conditioning apparatus, a power generation system, a heat transport apparatus or a secondary cooling machine.

More specifically, for example, a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, a vending machine or an ice making machine.

[Global warming potential (GWP)]

In this specification, as an index to the influence of a working fluid over global warming, GWP is employed. In this specification, GWP is a value (100 years) in Intergovernmental Panel on Climate Change (IPCC), Fourth assessment report (2007) unless otherwise specified.

GWPs of compounds are shown in Table 1.

[Table 1]

| Compound | GWP |
|---|---|
| R410A | 2088 |
| R404A | 3922 |
| HFO-1123 | 0.3 |
| HFO-1234yf | 4 |
| HFO-1234ze | 6 |
| HFC-32 | 675 |
| HFC-143a | 4470 |
| HFC-134a | 1430 |
| HFC-125 | 3500 |

The global warming potential (100 years) of HFO-1123 contained in the working fluid of the present invention is 0.3, which is remarkably smaller than GWPs of other HFOs, for example, GWP of HFO-1234ze of 6 or GWP of HFO-1234yf of 4.

Further, R410A (a composition of HFC-125 and HFC-32 in a mass ratio of 1:1) which is used for air-conditioning application, for example, a room air-conditioner, a store package air-conditioner, a building package air-conditioner or a plant package air-conditioner, which is to be replaced by the working fluid of the present invention, has GWP of so-high as 2,088. Further, R404A (a composition of HFC-125, 1,1,1-trifluoroethane (HFC-143a) and HFC-134a in a mass ratio of 11:13:1) which is used for refrigerating application, for example, a build-in showcase, a separate showcase or an industrial fridge freezer, has GWP of 3,922, which is twice as high as R410A.

The working fluid of the present invention preferably has a low global warming potential from the viewpoint of the influence over global warming. Specifically, GWP of the working fluid of the present invention is preferably at most 2,000, more preferably at most 1,500, particularly preferably at most 1,000. GWP of 2,000 is about 50% of R404A used for refrigerating application, and GWP of 1,000 is about 50% of that of R410A used for air-conditioning application, thus indicating that the influence over global warming can be remarkably decreased.

GWP of a mixture is represented by a weighted average by the composition mass. For example, GWP of a mixture of HFO-1123 and HFC-134a in a mass ratio of 1:1 can be calculated as (0.3+1430)/2=715. In a case where the working fluid of the present invention contains an optional component other than HFO-1123, HFC-134a and HFC-125, GWP of the working fluid can be obtained by weighted average of the GWP of the optional component per unit mass by the composition mass.

[Advantageous effects]

The above-described heat cycle system of the present invention, which employs a working fluid containing HFO-1123 and either one or both of HFC-134a and HFC-125, has less influence over the ozone layer and global warming.

Further, the heat cycle system of the present invention is also excellent in the cycle performance.

Further, since the proportion of HFO-1123 in a gaseous phase formed in the system is controlled to be at most 50 mass%, combustibility of the working fluid in the gaseous phase is suppressed. Accordingly, the working fluid is less likely to burn even when the working fluid in a gaseous phase in the system leaks out, is mixed with the air and is ignited, whereby the safety is secured.

EXAMPLES

Now, the present invention will be described in further detail with reference to Examples. However, it should be understood that the present invention is by no means restricted thereto.

[Evaluation of combustibility]

Combustibility was evaluated by equipment as defined in ASTM E-681.

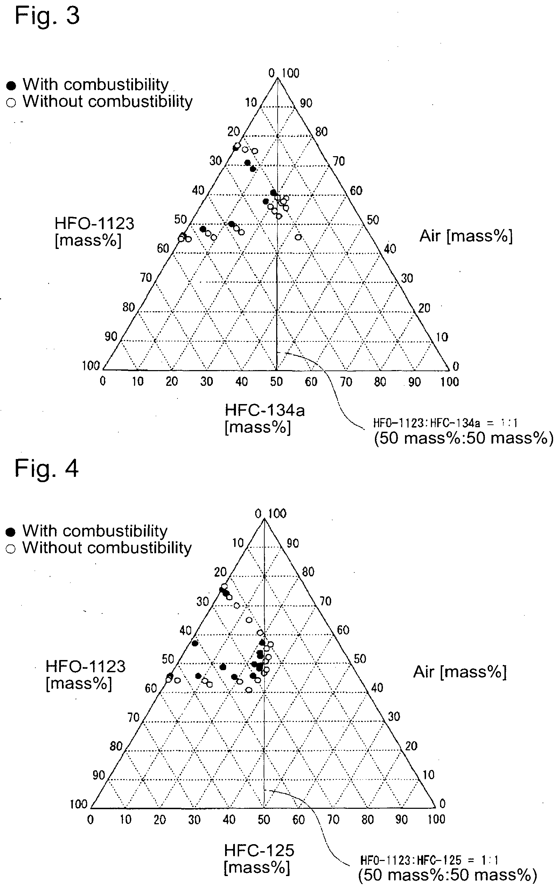

A flask having an internal capacity of 12 liter placed in a constant temperature chamber controlled to a temperature of 25°C was evacuated of air, and a working fluid and the air adjusted to the concentrations as plotted on the diagram in Fig. 3 or 4 were enclosed to the atmospheric pressure. Then, in a gaseous phase in the vicinity of the center in the flask, the working fluid was ignited by spark ignition under 15 kV at 30 mA for 0.4 second, and flame propagation was visually confirmed. In a case where the angle of upward flame propagation exceeded 90°, the working fluid was rated as having combustibility, and in a case where the angle is less than 90°, the working fluid was rated as having no combustibility.

[Ex. 1]

HFO-1123 and HFC-134a were mixed in a predetermined proportion to evaluate combustibility of a working fluid of two component system. The relation between the proportions of HFO-1123, HFC-134a and the air in the gaseous phase in the flask, and combustibility, is shown in Fig. 3.

As shown in Fig. 3, it was found that a working fluid having a proportion of HFO-1123 of at most 50 mass% based on the working fluid in the gaseous phase in the flask (on the right of the straight line indicating HFO-1123:HFC-134a=1:1 in Fig. 3) had no combustion range (a range "with combustibility"). In other words, it was found that a working fluid having a proportion of HFO-1123 of at most 50% based on the working fluid in the gaseous phase had no combustibility even if the working fluid in the gaseous phase was mixed with the air at any concentration.

[Ex. 2]

HFO-1123 and HFC-125 were mixed in a predetermined proportion to evaluate combustibility of a working fluid of two component system. The relation between the proportions of HFO-1123, HFC-125 and the air in the gaseous phase in the flask, and combustibility, is shown in Fig. 4.

As shown in Fig. 4, it was found that a working fluid having a proportion of HFO-1123 of at most 50 mass% based on the working fluid in the gaseous phase in the flask (on the right of the straight line indicating HFO-1123:HFC-125=1:1 in Fig. 4) had no combustion range (a range "with combustibility"). In other words, it was found that a working fluid having a proportion of HFO-1123 of at most 50 mass% based on the working fluid in the gaseous phase had no combustibility even if the working fluid in the gaseous phase was mixed with the air at any concentration.

[Ex. 3 to 7]

HFO-1123, HFC-134a and HFC-125 were mixed so that the proportions of the components in a gaseous phase in an equilibrium state were as identified in Table 2, to prepare a working fluid of three component system, and the working fluid was mixed with the air in a proportion every 1 mass% from 10 to 90 mass% based on the air, and combustibility in an equilibrium state was evaluated.

The evaluation results are shown in Table 2.

[Table 2]

|  |  | Ex. 3 | Ex. 4 | Ex. 5 | Ex. 6 | Ex. 7 |
|---|---|---|---|---|---|---|
| Proportion of component in gaseous phase in equilibrium state [mass%] | HFO-1123 | 50 | 50 | 50 | 40 | 70 |
|  | HGC-134a | 10 | 25 | 40 | 30 | 15 |
|  | HFC-125 | 40 | 25 | 10 | 30 | 15 |
| Combustibility |  | Nil | Nil | Nil | Nil | Observed |

As shown in Table 2, each of the working fluids in Ex. 3 to 6 having a proportion of HFO-1123 of at most 50 mass% based on the working fluid in the gaseous phase in the flask had no combustibility.

Whereas in Ex. 7 in which the proportion of HFO-1123 based on the working fluid in the gaseous phase in the flask was higher than 50 mass%, combustibility could not be suppressed.

[Ex. 8 to 12]

A pressure resistant container having an internal capacity of 12 liter was filled with 9 kg of a working fluid of three component system having HFO-1123, HFC-134a and HFC-125 mixed in a proportion as identified in Table 3.

After an equilibrium state was achieved, the working fluid in the gaseous phase was collected from the pressure resistant container, and it was mixed with the air in an optional proportion in a flask, and combustibility was evaluated in the same manner as in Ex. 1 to 7.

[Table 3]

|  |  | Ex. 8 | Ex. 9 | Ex. 10 | Ex. 11 | Ex. 12 |
|---|---|---|---|---|---|---|
| Proportion based on the entire working fluid in container [mass%] | HFO-1123 | 30 | 30 | 40 | 50 | 50 |
|  | HGC-134a | 50 | 40 | 10 | 50 | 40 |
|  | HFC-125 | 20 | 30 | 50 | 0 | 10 |
| Combustibility |  | Nil | Nil | Nil | Observed | Observed |

As shown in Table 3, in Ex. 8 to 10 in which the proportion of the total mass of HFO-1123 based on the total mass of the working fluid in the pressure resistant reactor was at most 42 mass%, the working fluid had no combustibility even if the working fluid in the gaseous phase in an equilibrium state was mixed with the air at any concentration. This is because the proportion of HFO-1123 in the gaseous phase in an equilibrium state was at most 50 mass%.

Whereas in Ex. 11 and 12 in which the proportion of the total mass of HFO-1123 based on the total mass of the working fluid in the pressure resistant container was 50 mass%, combustibility of the working fluid in the gaseous phase in an equilibrium state could not be suppressed. This is because in Ex. 11 and 12, HFO-1123 was likely to volatilize as compared with HFC-134a and HFC-125, and accordingly the proportion of HFO-1123 in the gaseous phase in an equilibrium state exceeded 50 mass%.

[Ex. 13 to 15]

HFO-1123, HFC-134a, HFC-125 and HFO-1234yf were mixed so that the proportions of the components in a gaseous phase in an equilibrium state were as identified in Table 4 to prepare a working fluid of four component system, and the working fluid was mixed with the air in a proportion every 1 mass% from 10 to 90 mass% based on the air, and combustibility in an equilibrium state was evaluated.

The evaluation results are shown in Table 4.

As shown in Table 4, the working fluid in each of Ex. 13 to 15 had no combustibility.

[Table 4]

| | | Ex. 13 | Ex. 14 | Ex. 15 |
|---|---|---|---|---|
| Proportion of component in gaseous phase in equilibrium state [mass%] | HFO-1123 | 20 | 25 | 30 |
| | HFC-134a | 20 | 25 | 20 |
| | HFC-125 | 30 | 25 | 30 |
| | HFO-1234yf | 30 | 25 | 20 |
| Combustibility | | Nil | Nil | Nil |

With respect to the working fluid containing HFO-1123 and either one or both of HFC-134a and HFC-125, the gas-liquid equilibrium relation was evaluated as follows.

[Ex. 16]

(Evaluation of gas-liquid equilibrium relation)

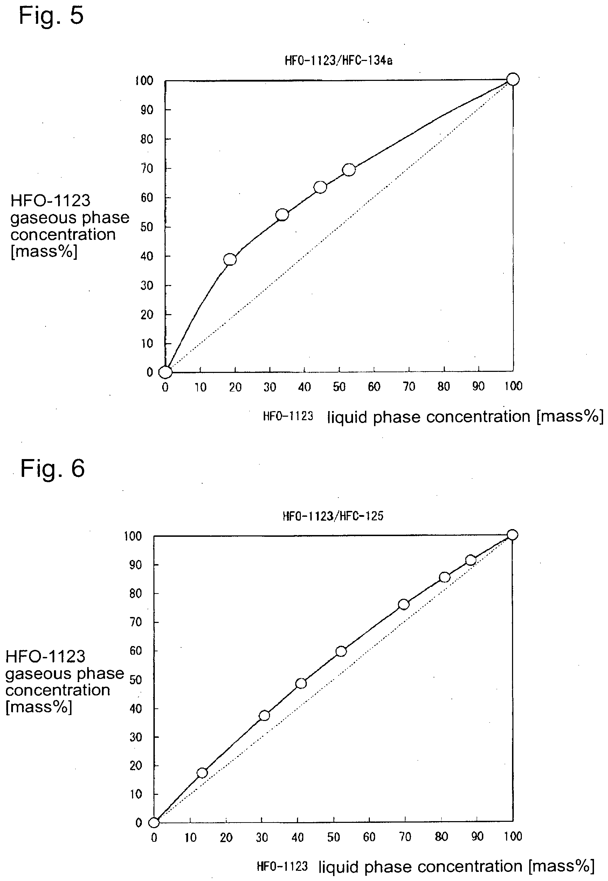

A pressure resistant container was filled with HFO-1123 and HFC-134a at predetermined concentrations at 25°C, followed by stirring, and the container was left at rest until a gas-liquid equilibrium state was achieved. Then, the gaseous phase and the liquid phase in the pressure resistant container were collected, and their compositions were analyzed by gas chromatography. The results are shown in Fig. 5.

Fig. 5 is a graph illustrating the relation between the liquid phase concentration (mass%) and the gaseous phase concentration (mass%) of HFO-1123 of each of the above-prepared mixtures of HFO-1123 and HFC-134a with various compositions in a gas-liquid equilibrium state. In Fig. 5, the solid line illustrates the relation between the liquid phase concentration (mass%) and the gaseous phase concentration (mass%) of HFO-1123 measured as above. Fig. 5 shows that when the concentration of HFO-1123 in the liquid phase in a gas-liquid equilibrium state is 30 mass%, the concentration of HFO-1123 in the gaseous phase is 50 mass%, and such a composition is confirmed to be incombustible from Fig. 3. On the other hand, Fig. 5 shows that when the concentration of HFO-1123 in the liquid phase in a gas-liquid equilibrium state is 50 mass%, the concentration of HFO-1123 in the gaseous phase is 67 mass%, and such a composition was confirmed to have a combustion range from Fig. 3. In other words, a composition having a concentration of HFO-1123 in the liquid phase in a gas-liquid equilibrium state of at most 30 mass%, has a concentration of HFO-1123 in a gaseous phase portion in a closed container of at most 50 mass%, and is incombustible even in the gaseous phase. Accordingly, even if such a composition leaks out from the gaseous phase portion accidentally or if the composition is filled into equipment from the gaseous phase portion, it has no combustibility.

[Ex. 17]

The same evaluation as in Ex. 16 was carried out with respect to HFO-1123 and HFC-125, and the results are shown in Fig. 6.

Fig. 6 is a graph illustrating the relation between the liquid phase concentration (mass%) and the gaseous phase concentration (mass%) of HFO-1123 of each of the above-prepared mixtures of HFO-1123 and HFC-125 with various compositions in a gas-liquid equilibrium state. Fig. 6 shows that when the concentration of HFO-1123 in the liquid phase in a gas-liquid equilibrium state is 42 mass%, the concentration of HFO-1123 in the gaseous phase is 50 mass%, and such a composition is confirmed to be incombustible from Fig. 4. On the other hand, Fig. 6 shows that when the concentration of HFO-1123 in the liquid phase in a gas-liquid equilibrium state is 50 mass%, the HFO-1123 concentration in the gaseous phase is 68 mass%, and such a composition is found to have a combustion range from Fig. 4. In other words, a composition having a concentration of HFO-1123 in the liquid phase in a gas-liquid equilibriums state of at most 42 mass% has a concentration of HFO-1123 in a gaseous phase portion in a closed container of at most 50 mass%, and is incombustible even in the gaseous phase. Accordingly, even when such a composition leaks out from the gaseous phase portion in a container accidentally or the composition is filled into equipment from the gaseous phase portion, the composition has no combustibility and thereby has very high safety.

[Evaluation of refrigerating cycle performance]

As the cycle performance (capacity and efficiency) when a working fluid was applied to a refrigerating cycle system 10 in Fig. 1, the refrigerating cycle performance (refrigerating capacity and coefficient of performance) was evaluated.

Evaluation was conducted under conditions such that the average evaporation temperature of the working fluid in the evaporator 14 was 0°C, the average condensing temperature of the working fluid in the condenser 12 was 40°C, the supercooling degree of the working fluid in the condenser 12 was 5°C, and the degree of superheat of the working fluid in the evaporator 14 was 5°C. Further, it was assumed that there was no loss in the equipment efficiency and no pressure loss in the pipelines and heat exchanger.

The refrigerating capacity Q and the coefficient of performance $\eta$ were obtained in accordance with the following formulae (2) and (3) from enthalpies h in the respective states (the subscript for h represents the state of the working fluid).

$$Q = h_A - h_D \qquad (2)$$

$$\eta = Q/\text{compression work}$$

$$= (h_A - h_D)/(h_B - h_A) \qquad (3)$$

The thermodynamic properties required for calculation of the refrigerating cycle performance were calculated based on the generalized equation of state (Soave-Redlich-Kwong equation) based on the law of corresponding state and various thermodynamic equations. If a characteristic value was not available, it was calculated employing an estimation technique based on a group contribution method.

The coefficient of performance represents the refrigerating efficiency in the refrigerating cycle system 10, and a higher coefficient of performance means that a higher output (refrigerating capacity) can be obtained by a smaller input (an electric energy required to operate a compressor).

Whereas, the refrigerating capacity means a capacity to refrigerate a load fluid, and a higher refrigerating capacity means that more works can be done in the same system. In other words, it means that with a working fluid having a higher refrigerating capacity, the desired performance can be obtained with a smaller amount, whereby the system can be downsized.

[Evaluation of global warming potential (GWP)]

Further, the values of the global warming potential of the working fluids used are shown in Tables 5 to 7.

The global warming potential (100 years) of HFC-134a is 1,430 by a value (100 years) in Intergovernmental Panel on Climate Change (IPCC), Fourth assessment report (2007), and the global warming potential (100 years) of HFC-125 is 3,500. The global warming potential (100 years) of HFO-1123 is 0.3 as a value measured in accordance with IPCC Fourth assessment report. Further, GWP of a mixture is represented by weighted average by the composition mass.

[Ex. 18 to 52]

HFO-1123, HFC-134a and HFC-125 were mixed so that the proportions in an equilibrium state were as identified in Table 5 or 6 to prepare a working fluid of three component system, which was applied to the refrigerating cycle system 10 in Fig. 1 to evaluate the refrigerating cycle performance (refrigerating capacity and coefficient of performance).

For evaluation, the relative performance (working fluid/R410A) of the refrigerating cycle performance (refrigerating capacity and coefficient of performance) of each working fluid was obtained based on the refrigerating cycle performance in a case of using R410A as the working fluid, as the standard. The evaluation results are shown in Tables 5 and 6.

[Table 5]

| | Proportion of component in gaseous phase in equilibrium state | | | Relative performance (based on R410A) | | Global warming potential |
|---|---|---|---|---|---|---|
| | HFO-1123 [mass%] | HFC-134a [mass%] | HFC-125 [mass%] | Coefficient of performance | Refrigerating capacity | |
| Ex. 18 | 5 | 95 | 0 | 1.08 | 0.48 | 1359 |
| Ex. 19 | 10 | 90 | 0 | 1.07 | 0.51 | 1287 |
| Ex. 20 | 20 | 80 | 0 | 1.06 | 058 | 1144 |
| Ex. 21 | 25 | 75 | 0 | 1.06 | 0.62 | 1073 |
| Ex. 22 | 30 | 70 | 0 | 1.05 | 0.65 | 1001 |
| Ex. 23 | 35 | 65 | 0 | 1.04 | 0.69 | 930 |
| Ex. 24 | 40 | 60 | 0 | 1.03 | 0.72 | 858 |
| Ex. 25 | 45 | 55 | 0 | 1.03 | 0.75 | 787 |
| Ex. 26 | 50 | 50 | 0 | 1.02 | 0.79 | 715 |
| Ex. 27 | 5 | 0 | 95 | 0.94 | 0.77 | 3325 |
| Ex. 28 | 10 | 0 | 90 | 0.94 | 0.80 | 3150 |
| Ex. 29 | 20 | 0 | 80 | 0.93 | 0.85 | 2800 |
| Ex. 30 | 25 | 0 | 75 | 0.93 | 0.87 | 2625 |
| Ex. 31 | 30 | 0 | 70 | 0.93 | 0.89 | 2450 |
| Ex. 32 | 35 | 0 | 65 | 0.93 | 0.92 | 2275 |
| Ex. 33 | 40 | 0 | 60 | 0.92 | 0.94 | 2100 |
| Ex. 34 | 45 | 0 | 55 | 0.92 | 0.96 | 1925 |
| Ex. 35 | 50 | 0 | 50 | 0.92 | 0.98 | 1750 |

[Table 6]

| | | Proportion of component in gaseous phase in equilibrium state | | | Relative performance (based on R410A) | | Global warming potential |
|---|---|---|---|---|---|---|---|
| | | HFO-1123 [mass%] | HFC-134a [mass%] | HFC-125 [mass%] | Coefficient of performance | Refrigerating capacity | |
| | Ex. 36 | 10 | 45 | 45 | 1.03 | 0.64 | 2219 |
| | Ex. 37 | 30 | 10 | 60 | 0.96 | 0.86 | 2243 |
| | Ex. 38 | 30 | 20 | 50 | 0.99 | 0.82 | 2036 |
| | Ex. 39 | 30 | 30 | 40 | 1.00 | 0.78 | 1829 |
| | Ex. 40 | 30 | 40 | 30 | 1.02 | 0.75 | 1622 |
| | Ex. 41 | 30 | 50 | 20 | 1.03 | 0.71 | 1415 |
| | Ex. 42 | 30 | 60 | 10 | 1.04 | 0.68 | 1208 |
| | Ex. 43 | 35 | 10 | 55 | 0.96 | 0.88 | 2068 |
| | Ex. 44 | 35 | 20 | 45 | 0.98 | 0.84 | 1861 |
| | Ex. 45 | 35 | 30 | 35 | 1.00 | 080 | 1654 |
| | Ex. 46 | 35 | 40 | 25 | 1.01 | 0.77 | 1447 |
| | Ex. 47 | 35 | 50 | 15 | 1.03 | 0.73 | 1240 |
| | Ex. 48 | 60 | 40 | 0 | 1.00 | 0.86 | 572 |
| | Ex. 49 | 60 | 0 | 40 | 0.92 | 1.02 | 1400 |
| | Ex. 50 | 0 | 0 | 100 | 0.94 | 0.74 | 3500 |
| | Ex. 51 | 0 | 100 | 0 | 1.08 | 0.44 | 1430 |
| | Ex. 52 | 100 | 0 | 0 | 0.92 | 1.15 | 0.3 |

As shown in Tables 5 and 6, in Ex. 18 to 26 in which a working fluid having HFC-134a added to HFO-1123 so that the proportion of HFO-1123 in a gaseous phase formed in the system would be 50 mass% was used, the coefficient of performance improved as compared with Ex. 52 in which HFO-1123 was used alone as the working fluid. Further, in Ex. 18 to 26, the refrigerating capacity was high as compared with Ex. 51 in which HFC-134a was used alone as the working fluid. Further, in Ex. 18 to 26, GWP was low as compared with R404A (GWP: 3922) used for refrigerating application.

In Ex. 27 to 35 in which a working fluid having HFC-125 added to HFO-1123 so that the proportion of HFO-1123 in a gaseous phase formed in the system would be at most 50 mass% was used, as compared with Ex. 52 in which HFO-1123 was used alone as the working fluid, the coefficient of performance was at the same level, and although the refrigerating capacity decreased, it was kept to be at least 0.77. Further, in Ex. 27 to 35, the refrigerating capacity was high as compared with Ex. 50 in which HFC-125 was used alone as the working fluid. Further, in Ex. 27 to 35, GWP was low as compared with e.g. R404A used for refrigerating application.

Further, in Ex. 36 to 47 in which a working fluid containing HFO-1123 in combination with HFC-134a and HFC-125 so that the proportion of HFO-1123 in a gaseous phase formed in the system would be at most 50 mass% was used, as compared with Ex. 52 in which HFO-1123 was used alone as the working fluid, the coefficient of performance improved and in addition, sufficient refrigerating capacity was maintained although it decreased. Further, in Ex. 36 to 47, GWP was low as compared with e.g. R404A used for refrigerating application.

Further, the same tendency was observed in Ex. 48 and 49 in which the proportion of HFO-1123 in the gaseous phase exceeded 50 mass%, however, combustibility was not sufficiently suppressed with such a composition.

[Ex. 53 to 93]

HFO-1123, HFC-125, HFO-1234yf and HFC-134a were mixed in proportions as identified in Table 7 to prepare a working fluid of four component system, which was applied to the refrigerating cycle system 10 in Fig. 1 to evaluate the refrigerating cycle performance (refrigerating capacity and coefficient of performance).

For evaluation, the relative performance (working fluid/R410A) of the refrigerating cycle performance (refrigerating capacity and coefficient of performance) of each working fluid was obtained based on the refrigerating cycle performance in a case of using R410A as the working fluid as the standard. The evaluation results are shown in Table 7.

[Table 7]

| | Proportion in working fluid | | | | Relative performance (based on R410A) | | Global warming potential |
|---|---|---|---|---|---|---|---|
| | HFO-1123 [mass%] | HFC-125 [mass%] | HFO-1234yf [mass%] | HFC-134a [mass%] | Coefficient of performance | Refrigerating capacity | |
| Ex. 53 | 3 | 4 | 40 | 53 | 1.05 | 0.503 | 900 |
| Ex. 54 | 3 | 4 | 50 | 43 | 1.046 | 0.502 | 757 |
| Ex. 55 | 3 | 7 | 45 | 45 | 1.045 | 0.509 | 890 |
| Ex. 56 | 3 | 7 | 50 | 40 | 1.043 | 0.508 | 819 |
| Ex. 57 | 6 | 8 | 45 | 41 | 1.041 | 0.532 | 868 |
| Ex. 58 | 6 | 8 | 50 | 36 | 1.039 | 0.531 | 797 |
| Ex. 59 | 6 | 12 | 45 | 37 | 1.037 | 0.541 | 951 |
| Ex. 60 | 6 | 14 | 50 | 30 | 1.033 | 0.545 | 921 |
| Ex. 61 | 10 | 12 | 40 | 38 | 1.035 | 0.571 | 965 |
| Ex. 62 | 10 | 12 | 45 | 33 | 1.032 | 0.57 | 894 |
| Ex. 63 | 10 | 16 | 35 | 39 | 1.033 | 0.58 | 1119 |
| Ex. 64 | 10 | 16 | 40 | 34 | 1.03 | 0.58 | 1048 |
| Ex. 65 | 14 | 25 | 30 | 31 | 1.021 | 0.633 | 1320 |

(continued)

| | | Proportion in working fluid | | | Relative performance (based on R410A) | | Global warming potential |
|---|---|---|---|---|---|---|---|
| | | HFO-1123 [mass%] | HFC-125 [mass%] | HFO-1234yf [mass%] | HFC-134a [mass%] | Coefficient of performance | Refrigerating capacity | |
| Ex. 66 | 14 | 25 | 35 | 26 | 1.018 | 0.634 | 1248 |
| Ex. 67 | 15 | 18 | 40 | 27 | 1.022 | 0.622 | 1018 |
| Ex. 68 | 15 | 20 | 35 | 30 | 1.023 | 0.627 | 1130 |
| Ex. 69 | 15 | 25 | 30 | 30 | 1.02 | 0.641 | 1305 |
| Ex. 70 | 15 | 30 | 25 | 30 | 1.017 | 0.653 | 1480 |
| Ex. 71 | 15 | 30 | 30 | 25 | 1.014 | 0.655 | 1409 |
| Ex. 72 | 15 | 35 | 20 | 30 | 1.015 | 0.666 | 1655 |
| Ex. 73 | 15 | 35 | 25 | 25 | 1.011 | 0.668 | 1584 |
| Ex. 74 | 15 | 35 | 30 | 20 | 1.007 | 0.669 | 1512 |
| Ex. 75 | 18 | 22 | 25 | 35 | 1.023 | 0.653 | 1272 |
| Ex. 76 | 18 | 21 | 30 | 31 | 1.02 | 0.652 | 1180 |
| Ex. 77 | 18 | 21 | 37 | 24 | 1.016 | 0.652 | 1080 |
| Ex. 78 | 18 | 26 | 25 | 31 | 1.018 | 0.665 | 1354 |
| Ex. 79 | 18 | 26 | 30 | 26 | 1.014 | 0.666 | 1283 |
| Ex. 80 | 20 | 32 | 25 | 23 | 1.007 | 0.698 | 1450 |
| Ex. 81 | 23 | 28 | 25 | 24 | 1.007 | 0.708 | 1324 |
| Ex. 82 | 24 | 33 | 25 | 18 | 0.998 | 0.731 | 1413 |
| Ex. 83 | 28 | 35 | 20 | 17 | 0.991 | 0.767 | 1469 |
| Ex. 84 | 30 | 40 | 18 | 12 | 0.979 | 0.798 | 1572 |
| Ex. 85 | 35 | 40 | 15 | 10 | 0.97 | 0.836 | 1544 |
| Ex. 86 | 35 | 45 | 10 | 10 | 0.966 | 0.852 | 1719 |

(continued)

| | Proportion in working fluid | | | | Relative performance (based on R410A) | | Global warming potential |
|---|---|---|---|---|---|---|---|
| | HFO-1123 [mass%] | HFC-125 [mass%] | HFO-1234yf [mass%] | HFC-134a [mass%] | Coefficient of performance | Refrigerating capacity | |
| Ex. 87 | 35 | 50 | 5 | 10 | 0.963 | 0.867 | 1893 |
| Ex. 88 | 2 | 10 | 20 | 68 | 1.056 | 0.501 | 1323 |
| Ex. 89 | 15 | 55 | 10 | 20 | 0.997 | 0.725 | 2211 |
| Ex. 90 | 10 | 15 | 20 | 55 | 1.043 | 0.571 | 1312 |
| Ex. 91 | 40 | 50 | 5 | 5 | 0.946 | 0.906 | 1822 |
| Ex. 92 | 3 | 5 | 35 | 57 | 1.051 | 0.504 | 992 |
| Ex. 93 | 25 | 60 | 5 | 10 | 0.968 | 0.823 | 2243 |

As shown in Table 7, it is found that in Ex. 53 to 87 in which based on the total amount of HFO-1123, HFC-134a, HFC-125 and HFO-1234yf, the proportion of HFO-1123 is at least 3 mass% and at most 35 mass%, the proportion of HFC-134a is at least 10 mass% and at most 53 mass%, the proportion of HFC-125 is at least 4 mass% and at most 50 mass%, and the proportion of HFO-1234yf is at least 5 mass% and at most 50 mass%, the coefficient of performance and the refrigerating capacity are comprehensively at high levels, and GWP is kept lower, as compared with Ex. 88 to 93 in which the proportions are out of such ranges.

INDUSTRIAL APPLICABILITY

The heat cycle system of the present invention is useful for e.g. a refrigerator, an air-conditioning apparatus, a power generation system (such as exhaust heat recovery power generation) and a latent heat transport apparatus (such as a heat pipe).

The entire disclosure of Japanese Patent Application No. 2014-044171 filed on March 6, 2014 including specification, claims, drawings and summary is incorporated herein by reference in its entirety.

REFERENCE SYMBOLS

10: refrigerating cycle system
11: compressor
12: condenser
13: expansion valve
14: evaporator

**Claims**

1. A working fluid for heat cycle, which contains trifluoroethylene and either one or both of 1,1,1,2-tetrafluoroethane and pentafluoroethane, wherein the proportion of trifluoroethylene based on the total mass of the working fluid is at most 42 mass%.

2. The working fluid for heat cycle according to Claim 1, wherein the proportion of the total amount of 1,1,1,2-tetrafluoroethane and pentafluoroethane based on the total mass of the working fluid is at least 58 mass%.

3. The working fluid for heat cycle according to Claim 1 or 2, which contains trifluoroethylene, 1,1,1,2-tetrafluoroethane and pentafluoroethane, and 2,3,3,3-tetrafluoropropene, wherein
the proportion of the total amount of trifluoroethylene, 1,1,1,2-tetrafluoroethane, pentafluoroethane and 2,3,3,3-tetrafluoropropene based on the total mass of the working fluid is higher than 90 mass% and at most 100 mass%, and based on the total amount of trifluoroethylene, 1,1,1,2-tetrafluoroethane, pentafluoroethane and 2,3,3,3-tetrafluoropropene, the proportion of trifluoroethylene is at least 3 mass% and at most 35 mass%, the proportion of 1,1,1,2-tetrafluoroethane is at least 10 mass% and at most 53 mass%, the proportion of pentafluoroethane is at least 4 mass% and at most 50 mass%, and the proportion of 2,3,3,3-tetrafluoropropene is at least 5 mass% and at most 50 mass%.

4. The working fluid for heat cycle according to Claim 3, wherein based on the total amount of trifluoroethylene, 1,1,1,2-tetrafluoroethane, pentafluoroethane and 2,3,3,3-tetrafluorpropene, the proportion of trifluoroethylene is at least 6 mass% and at most 25 mass%, the proportion of 1,1,1,2-tetrafluoroethane is at least 20 mass% and at most 35 mass%, the proportion of pentafluoroethane is at least 8 mass% and at most 30 mass%, and the proportion of 2,3,3,3-tetrafluoropropene is at least 20 mass% and at most 50 mass%.

5. The working fluid for heat cycle according to any one of Claims 1 to 4, which has a global warming potential of at most 2,000.

6. A heat cycle system, which employs a working fluid for heat cycle containing trifluoroethylene and either one or both of 1,1,1,2-tetrafluoroethane and pentafluoroethane, wherein the proportion of trifluoroethylene in a gaseous phase formed in the heat cycle system is at most 50 mass%.

7. The heat cycle system according to Claim 6, wherein the proportion of trifluoroethylene based on the total mass of the working fluid in the system is at most 42 mass%.

8. The heat cycle system according to Claim 6 or 7, wherein the proportion of the total amount of 1,1,1,2-tetrafluoroethane and pentafluoroethane based on the total mass of the working fluid in the system is at least 58 mass%.

9. The heat cycle system according to any one of Claims 6 to 8, wherein
the working fluid for heat cycle contains trifluoroethylene, 1,1,1,2-tetrafluoroethane and pentafluoroethane, and 2,3,3,3-tetrafluoropropene,
the proportion of the total amount of trifluoroethylene, 1,1,1,2-tetrafluoroethane, pentafluoroethane and 2,3,3,3-tetrafluoropropene based on the total mass of the working fluid is higher than 90 mass% and at most 100 mass%, and based on the total amount of trifluoroethylene, 1,1,1,2-tetrafluoroethane, pentafluoroethane and 2,3,3,3-tetrafluoropropene, the proportion of trifluoroethylene is at least 3 mass% and at most 35 mass%, the proportion of 1,1,1,2-tetrafluoroethane is at least 10 mass% and at most 53 mass%, the proportion of pentafluoroethane is at least 4 mass% and at most 50 mass%, and the proportion of 2,3,3,3-tetrafluoropropene is at least 5 mass% and at most 50 mass%.

10. The heat cycle system according to Claim 9, wherein based on the total amount of trifluoroethylene, 1,1,1,2-tetrafluoroethane, pentafluoroethane and 2,3,3,3-tetrafluoropropene, the proportion of trifluoroethylene is at least 6 mass% and at most 25 mass%, the proportion of 1,1,1,2-tetrafluoroethane is at least 20 mass% and at most 35 mass%, the proportion of pentafluoroethane is at least 8 mass% and at most 30 mass%, and the proportion of 2,3,3,3-tetrafluoropropene is at least 20 mass% and at most 50 mass%.

11. The heat cycle system according to any one of Claims 6 to 10, wherein the working fluid for heat cycle has a global warming potential of at most 2,000.

12. The heat cycle system according to any one of Claims 6 to 11, which is used for a refrigerating apparatus, an air-conditioning apparatus, a power generation system, a heat transport apparatus or a secondary cooling machine.

13. The heat cycle system according to any one of Claims 6 to 11, which is used for a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, an ice making machine or a vending machine.

## Fig. 1

## Fig. 2

## Fig. 3

● With combustibility
○ Without combustibility

HFO-1123 [mass%]

Air [mass%]

HFC-134a [mass%]

HFO-1123:HFC-134a = 1:1
(50 mass%:50 mass%)

## Fig. 4

● With combustibility
○ Without combustibility

HFO-1123 [mass%]

Air [mass%]

HFC-125 [mass%]

HFO-1123:HFC-125 = 1:1
(50 mass%:50 mass%)

## Fig. 5

HFO-1123/HFC-134a

HFO-1123 gaseous phase concentration [mass%]

HFO-1123 liquid phase concentration [mass%]

## Fig. 6

HFO-1123/HFC-125

HFO-1123 gaseous phase concentration [mass%]

HFO-1123 liquid phase concentration [mass%]

## INTERNATIONAL SEARCH REPORT

| | International application No. |
|---|---|
| | PCT/JP2015/056563 |

**A.    CLASSIFICATION OF SUBJECT MATTER**
*C09K5/04*(2006.01)i, *F25B1/00*(2006.01)i

According to International Patent Classification (IPC) or to both national classification and IPC

**B.    FIELDS SEARCHED**

Minimum documentation searched (classification system followed by classification symbols)
C09K5/04, F25B1/00

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2012/157764 A1  (Asahi Glass Co., Ltd.), 22 November 2012 (22.11.2012), | 1,2,5-8, 11-13 |
| A | claims 1, 3, 10, 13; paragraphs [0002] to [0006], [0011], [0068] <br> & JP 2014-98166 A          & JP 2015-7257 A <br> & US 2014/0070132 A1     & EP 2711405 A1 <br> & DE 112012002154 T       & CN 103562338 A | 3,4,9,10 |
| A | WO 2012/157762 A1  (Asahi Glass Co., Ltd.), 22 November 2012 (22.11.2012), entire text; all drawings <br> & JP 2014-141538 A | 1-13 |

| ☒ | Further documents are listed in the continuation of Box C. | ☐ | See patent family annex. |

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 May 2015 (27.05.15) | 09 June 2015 (09.06.15) |

| Name and mailing address of the ISA/ <br> Japan Patent Office <br> 3-4-3,Kasumigaseki,Chiyoda-ku, <br> Tokyo 100-8915,Japan | Authorized officer <br><br><br> Telephone No. |
|---|---|

Form PCT/ISA/210 (second sheet) (July 2009)

## INTERNATIONAL SEARCH REPORT

| | International application No. |
|---|---|
| | PCT/JP2015/056563 |

C (Continuation). DOCUMENTS CONSIDERED TO BE RELEVANT

| Category* | Citation of document, with indication, where appropriate, of the relevant passages | Relevant to claim No. |
|---|---|---|
| A | WO 2012/157763 A1 (Asahi Glass Co., Ltd.), 22 November 2012 (22.11.2012), entire text; all drawings & US 2014/0077122 A1 & EP 2711406 A1 & CN 103534328 A | 1-13 |
| A | JP 2012-505296 A (E.I. Du Pont de Nemours & Co.), 01 March 2012 (01.03.2012), entire text; all drawings & JP 2011-522772 A & US 2009/0143604 A1 & US 2010/0090156 A1 & US 2012/0083619 A1 & US 2012/0168672 A1 & WO 2010/042781 A2 & WO 2009/067571 A1 & EP 2215097 A1 & EP 2331489 A2 & CN 101861322 A & KR 10-2010-0099182 A & AU 2009302263 A & CA 2736216 A | 1-13 |
| P,X P,A | WO 2015/005290 A1 (Asahi Glass Co., Ltd.), 15 January 2015 (15.01.2015), claims 1, 5, 10, 13 to 15; paragraphs [0011], [0152] (Family: none) | 1,5-7,11-13 2-4,8-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4110388 A
- JP 2006512426 A
- WO 2012157764 A
- US 4249412 A
- JP 10502737 A
- JP 2007511645 A
- JP 2008500437 A
- JP 2008531836 A
- JP 2014044171 A